# EUROPEAN PATENT SPECIFICATION

(11) **EP 1 733 814 B1**
(45) Date of publication and mention of the grant of the patent: **06.05.2009**
(21) Application number: 06445034.9
(22) Date of filing: 30.05.2006
(51) Int. Cl.: B21B 27/03

(54) **A roll**
Walze
Rouleau

(30) Priority: 17.06.2005 SE 0501389
(43) Date of publication of application: 20.12.2006
(73) Proprietor: Sandvik Intellectual Property AB, 811 81 Sandviken (SE)
(72) Inventor: Vlk, Jaroslav, 8610 Uster (CH); Gleizer, Jorge, 124 72 Bandhagen (SE); Andersson, Jerker, 811 92 Sandviken (SE)
(74) Representative: Taquist, Henrik Lennart Emanuel

(56) References cited:
- EP-A- 1 300 211
- US-A- 5 735 788
- PATENT ABSTRACTS OF JAPAN vol. 2000, no. 21, 3 August 2001 (2001-08-03) & JP 2001 113307 A (SUMITOMO ELECTRIC IND LTD), 24 April 2001 (2001-04-24)

## Description

### Technical Field of the Invention

This invention relates to a roll of the type that comprises a roll shaft and two axially spaced-apart stop rings, one of which is fixed and the other one is a lock nut, a plurality of other rings in the form of roll rings and/or spacer rings being mounted between the stop rings, as well as at least one spring body which is manufactured of an elastic material and is delimited by two axially spaced-apart ends.

### Prior Art

In rolls of the kind generally mentioned above - which by those skilled in the art are referred to as combi rolls - it is important that the roll rings are kept pressed in close contact against occurring spacer rings in order for the rings not to slip in relation to each other. For this purpose, solely the lock nut itself is inadequate, and therefore it is necessary to arrange, in the set of rings, at least one powerful spring, which can,for a long time, continuously apply a spring prestress to the rings. For this purpose, Belleville springs, among others, have previously been used (see, for instance, US-A-5735788). However, for many different reasons, the use of Belleville springs has not been successful. One of these reasons is that such springs have a tendency to slacken or be fatigued too fast. Another reason is that a Belleville spring only has line contact with adjacent rings and not surface contact.

### Objects and Features of the Invention

The present invention aims at obviating the spring prestress problems that are involved with previously known roll and springs associated thereto, and at providing a roll having an improved prestress between the rings thereof. Therefore, a primary object of the invention is to provide a roll having a spring that is powerful and has a long service life, in so far that it should be able to work in a powerful way for a long time without slackening. An additional object is to provide a roll with a spring that has a short stroke or spring length and in spite of this generates considerable, dynamic spring forces. An additional object of the invention is to provide a roll with a spring which has a moderate axial extension in order not to intrude unnecessarily on the available space (roll width) between the stop rings. Furthermore, the invention aims at providing a surface contact between the spring and the adjacent rings rather than line contact.

According to the invention, at least the primary object is attained by a roll of the type defined in the independent claim 1. Advantageous embodiments of the roll are furthermore defined in the dependent claims 2-8.

### Brief Description of the Appended Drawings

In the drawings:
- Fig. 1: is a partial longitudinal section through a combi roll in which a spring is included,
- Fig. 2: is a perspective view of solely the spring,
- Fig. 3: is an end view of the spring, and
- Fig. 4: is an enlarged longitudinal section A-A in Fig. 3.

### Detailed Description of a Preferred Embodiment of the Invention

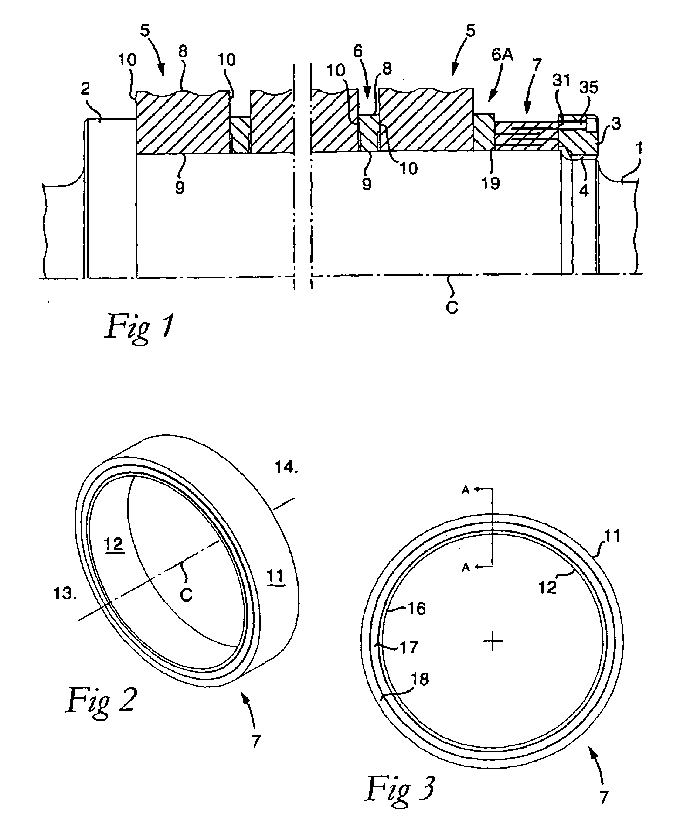

In Fig. 1, reference numeral 1 designates a drivable roll shaft that has a rotationally symmetrical basic shape, and is provided with two axially spaced-apart stop rings 2, 3, one of which, viz. the ring 2, is fixed, while the other one is a lock nut 3. The fixed stop ring 2 may either be made in the form of a ring-shaped shoulder of the shaft, as shown in Fig. 1, or be made in the form of a separate ring (not shown) which is detachably mounted on the shaft, although axially locked in relation to the same. The detachable lock nut 3 is connected to the shaft via a threaded joint 4 which includes a female thread on the inside of the nut ring and male thread on the shaft.

Between the stop rings 2, 3 a set of detachable rings is arranged, of which certain are roll rings 5, and others are spacer rings 6. A special spacer ring 6A is inserted between a roll ring 5 and a ring-shaped spring designated 7. Generally, all rings have a rotationally symmetrical, more precisely cylindrical, basic shape, so far that they are delimited between, on one hand, external and internal cylinder surfaces 8, 9 and, on the other hand, opposite, planar end surfaces 10. The cylinder surfaces 8, 9, which usually are machined by turning, are defined by the centre axis C of the shaft.

Figs. 2-4 illustrate the nature of the spring 7 in detail.

In Fig. 2, it is seen that also the body forming the spring 7 has a rotationally symmetrical basic shape determined by external and internal cylinder surfaces 11, 12 concentric with the centre axis C (in the mounted state, the centre axis of the ring-shaped spring body coincides with the centre axis of the roll shaft 1). Furthermore, the spring body is delimited by opposite, axially spaced-apart ends 13, 14 that are generally ring-shaped. In order to provide conceptual clarity in the description to follow, the ends are referred to as front and rear, respectively. However, these are related only to Fig. 2, where the end 13 is shown in the front and the end 14 at the rear.

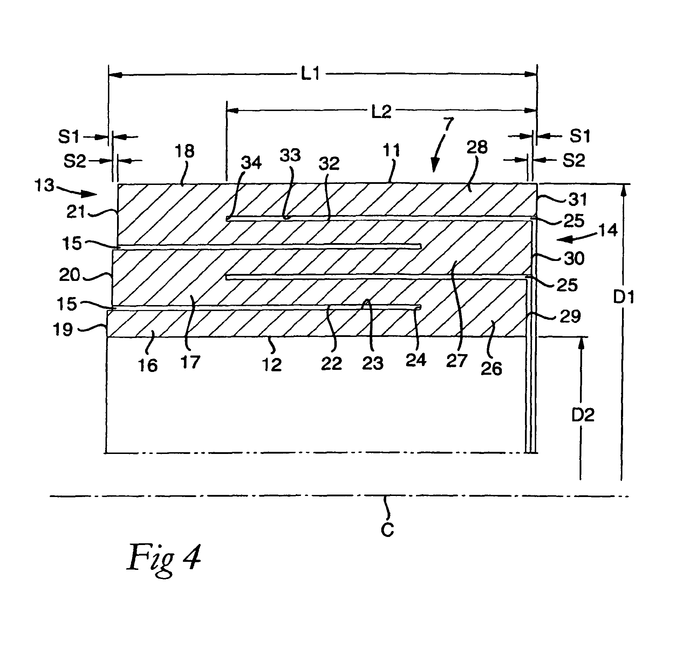

As is seen in Fig. 4, a number of slots or gaps 15 opens in the front end 13 of the spring body, which slots extend towards the rear end 14, without reaching up to the same. In the example, the number of forward opening slots 15 amounts to two. In such a way, the slots 15 separate in total three different laminae 16, 17, 18, each one of which has a free end surface 19, 20, 21.

Each slot 15 is delimited by two spaced-apart cylinder surfaces 22, 23 which are concentric and end in a bottom 24.

In the rear end 14 of the spring body, two similar, second slots 25 open, which extend towards the front end 13, without reaching up to the same. In the same way as the slots 15, the slots 25 separate three rearward-facing laminae 26, 27, 28. The end surfaces of the same three laminae are designated 29, 30, 31. Also the slots 25 are defined by cylindrical, concentric limiting surfaces 32, 33 which end in bottoms 34.

In Fig. 4, L1 designates the total length or axial extension of the spring body, while L2 designates the length or depth of the individual slot 25. Advantageously, all four slots, i.e., also the slots 15, have one and the same depth L2. Although it is possible to vary the depth of the slots within fairly wide limits, and thereby vary the properties of the spring, the depth L2 should amount to at least 60 % of the total length L1 of the spring body. On the other hand, the slot depth L2 should not exceed 90 % of the length L1.

The individual slot 15 is advantageously located about halfway between the two adjacent slots 25. The two outer forward-facing laminae 17, 18 have a material thickness (such as this is determined by the difference between the outer diameter and the inner diameter) twice as large as the corresponding material thickness of the inner forward-facing lamina 16. Conversely, the outer rearward-facing lamina 28 has a material thickness that is half as large as the material thickness of the two inner rearward-facing laminae 26, 27.

In accordance with a vital feature of the invention, one of the end surfaces of each end of the spring body is axially displaced in relation to the end surface of one or more adjacent laminae. Thus, as is clearly seen in Fig. 4, the end surface 19 of the intermediate forward-facing lamina 16 is axially displaced (forwardly) in relation to the end surface 20 of the nearest lamina 17. Furthermore, in the example, the end surface 20 of the lamina 17 is axially displaced forwardly in relation to the end surface 21 of the outermost lamina 18. In the unloaded state of the spring, such as shown in Fig. 4, the displacements are designated S1 and S2, respectively. In practice, these may be within the range of 0,2-2 mm, suitably 0,4-1 mm, on the assumption that the spring body has such dimensions that the difference between the outer diameter D1 and the inner diameter D2 is within the range of 20-50 mm, and the total length L1 within the range of 60-120 mm.

In an analogous (although reversed) way, the end surfaces 29, 30, 31 are axially displaced in steps in relation to each other with S1, S2. In practice, the displacements S1, S2 at the end 14 may be mutually equally large, as well as equally large as the corresponding S1, S2 at the opposite end 13.

According to the invention, at least those end surfaces 19, 31 that form the contact surfaces of the spring body against adjacent rings in the roll are made having planar shape. For practical reasons of manufacture, also the other end surfaces 20, 21; 29, 30 may be planar.

The described spring body may advantageously be manufactured in one single piece of, for instance, metal, such as steel. By machining (turning, milling and/or hollow drilling) a ring-shaped blank of, for instance, steel having suitable elasticity properties, it is accordingly possible to produce springs that can provide for highly varying demands concerning spring force, spring length, dimensions, etc.

In Fig. 1, the spring 7 is shown mounted between the lock nut 3 and the spacer ring 6A, the planar end surface 31 of the spring being pressed against the likewise planar end surface of the inside of the lock nut 3, while the end surface 19 is pressed against the planar end surface of the spacer ring 6A. When the lock nut is tightened, the spring is supplied with counter-directed axial forces that generate labyrinth-shaped trains of spring forces inside the spring body, more precisely between the end surfaces 19, 31, the spring body being compressed by elastic deformation of the same, above all in the U-shaped portions of the laminae adjacent to the slot bottoms 24, 34. Dependent on the size of the clamping force, the end surfaces 19, 31 will move somewhat inwardly in relation to the adjacent end surfaces 20, 30 that in turn can move inwardly in relation to the end surfaces 21, 29. Even if the deformation and displacement motions are small, a considerable spring force will be generated in the spring.

In Fig. 1, one of a plurality of tightening devices 35, e.g., screws, is shown arranged in a rim formation around the lock nut, which tightening devices may be utilized in order not only to initially adjust the spring-tension, but also if required readjust the same.

### Feasible Modifications of the Invention

The placing of the spring in the set of rings is not limited to the immediate vicinity of the lock nut. The essential thing is that the spring is active in the set of rings of the roll shaft. Furthermore, the spring itself may be realized in another way than in the form of a body shaped in one single piece. Thus, it is possible to assemble the spring body of two or more separate components. These can be permanently united to each other in a suitable way but they can also be present as individual pieces. It is also feasible to manufacture the spring of other materials than steel or metal. Furthermore, the number of laminae, and the number of separating slots, respectively, may be varied most considerably within the scope of the subsequent claims. However, at least one slot has to open in one end of the spring body and at least one slot in the opposite end.

## Claims

1. A roll comprising a roll shaft (1) and two axially spaced-apart stop rings (2, 3), one of which (2) is fixed and the other one is a lock nut (3), a plurality of other rings in the form of roll and/or spacer rings being mounted between the stop rings (2, 3), as well as at least one spring body (7), which is manufactured of an elastic material and delimited by two axially spaced-apart ends (13, 14), **characterized in that**, in a front end (13) of the spring body (7), at least one first slot (15) opens which extends towards the rear end (14) without reaching the same, and which separates two forward-facing laminae (16, 17) having ring-shaped end surfaces (19, 20), that in the rear end (14) at least one second slot (25) opens which extends towards the front end (13) without reaching the same, and which separates two rearward-facing laminae (27, 28) having ring-shaped end surfaces (30, 31), and that at each one of the ends (13, 14) of the spring body, an end surface (19, 31) protrudes axially in relation to the end surface (20, 30) of an adjacent lamina, the protruding end surfaces (19, 31) at the opposite ends of the spring being pressed against end surfaces (10) of adjacent rings (6A, 3).

2. Roll according to claim 1, **characterized in that** the ring-shaped end surface (19, 31) of the individual lamina (16, 28) is planar and extends perpendicularly to an axial extension (C) of the spring body (7), also the end surfaces of the adjacent rings (6A, 3) being planar and extending perpendicularly to the axial extension thereof.

3. Roll according to claim 1 or 2, **characterized in that** the axial length (L2) of the slot (15, 25) of the spring body (7) amounts to at least 60 % of the total length (L1) of the spring body.

4. Roll according to any one of the preceding claims, **characterized in that** the axial length (L2) of the slot (15, 25) of the spring body amounts to at most 90 % of the total length (L1) of the spring body (7).

5. Roll according to any one of the preceding claims, **characterized in that**, in each end (13, 14) of the spring body (7), two or more slots (15, 25) open that separate three or more laminae (16, 17, 18; 26, 27, 28).

6. Roll according to any one of the preceding claims, **characterized in that** the spring body (7) has a flat shape so far that the axial length (L1) between opposite ends (13, 14) thereof is less than the outer diameter (D1).

7. Roll according to any one of the preceding claims, **characterized in that** the spring body (7) is one single piece of metal.

8. Roll according to any one of claims 1-6, **characterized in that** the spring body is more than one single piece of metal.

## Patentansprüche

1. Walze mit einem Walzenschaft (1) und zwei in axialer Richtung voneinander beabstandeten Anschlag- bzw. Begrenzungsringen (2, 3), von denen einer (2) fixiert ist und der andere eine Kontermutter (3) ist, wobei eine Mehrzahl weiterer Ringe in Form von Walzen- und/oder Abstandsringen zwischen den Begrenzungsringen (2, 3) montiert sind, sowie wenigstens einem Federkörper (7), der aus einem elastischen Material hergestellt ist und durch zwei in axialer Richtung voneinander beabstandete Enden (13, 14) begrenzt wird, **dadurch gekennzeichnet, daß** sich in einem vorderen Ende (13) des Federkörpers (7) wenigstens ein erster Schlitz (15) öffnet, der sich in Richtung auf das hintere Ende (14) erstreckt, ohne dieses jedoch zu erreichen, und die beiden nach vorne weisenden Lagen (16, 17) mit ringförmigen Stirnflächen (19, 20) voneinander trennt, daß sich in dem hinteren Ende (14) wenigstens ein zweiter Schlitz (25) öffnet, der sich in Richtung auf das vordere Ende (13) erstreckt, ohne dieses jedoch zu erreichen, und zwei nach hinten weisende Lagen (27, 28) mit ringförmigen Stirnflächen (30, 31) voneinander trennt, und daß an jedem der Enden (13, 14) des Federkörpers eine Stirnfläche (19, 31) in Bezug auf die Stirnfläche (20, 30) einer dazu benachbarten Lage in axialer Richtung vorspringt, wobei die vorspringenden Stirnflächen (19, 31) an den gegenüberliegenden Enden der Feder gegen Stirnflächen (10) von benachbarten Ringen (6A, 3) gedrückt werden.

2. Walze nach Anspruch 1, **dadurch gekennzeichnet, daß** die ringförmige Stirnfläche (19, 31) der einzelnen Lage (16, 28) eben ist und sich senkrecht zu einer axialen Erstreckung (C) des Federkörpers (7) erstreckt, wobei auch die Stirnflächen der benachbarten Ringe (6A, 3) eben sind und sich senkrecht zu deren axialer Erstreckung erstrecken.

3. Walze nach Anspruch 1 oder 2, **dadurch gekennzeichnet, daß** die axiale Länge (L2) des Schlitzes (15, 25) des Federkörpers (7) wenigstens 60% der Gesamtlänge (L1) des Federkörpers ausmacht.

4. Walze nach einem der vorangegangenen Ansprüche, **dadurch gekennzeichnet, daß** die axiale Länge (L2) des Schlitzes (15, 25) des Federkörpers höchstens 90% der Gesamtlänge (L1) des Federkörpers (7) ausmacht.

5. Walze nach einem der vorangegangenen Ansprüche, **dadurch gekennzeichnet, daß** sich in jedem Ende (13, 14) des Federkörpers (7) zwei oder mehrere Schlitze (15, 25) öffnen, die drei oder mehr Lagen (16, 17, 18; 26, 27, 28) voneinander trennen.

6. Walze nach einem der vorangegangenen Ansprüche, **dadurch gekennzeichnet, daß** der Federkörper (7) eine flache Form hat, so daß die axiale Länge (L1) zwischen seinen einander gegenüberliegenden Enden (13, 14) kleiner ist als der Außendurchmesser (D1).

7. Walze nach einem der vorangegangenen Ansprüche, **dadurch gekennzeichnet, daß** der Federkörper (7) ein einziges Stück aus Metall ist.

8. Walze nach einem der Ansprüche 1 bis 6, **dadurch gekennzeichnet, daß** der Federkörper aus mehr als einem Stück Metall besteht.

## Revendications

1. Cylindre comprenant un arbre de cylindre (1) et deux bagues d'arrêt (2, 3) espacées axialement, dont l'une (2) est fixe et l'autre est un écrou de blocage (3), une pluralité d'autres bagues ayant la forme de cylindre et/ou de bagues d'écartement étant montées entre les bagues d'arrêt (2, 3), ainsi qu'au moins un corps formant ressort (7), qui est fabriqué en un matériau élastique et délimité par deux extrémités (13, 14) espacées axialement, **caractérisé en ce que,** dans une extrémité avant (13) du corps formant ressort (7), au moins une première fente (15) débouchant qui s'étend vers l'extrémité arrière (14) sans atteindre la susdite, et qui sépare deux feuilles (16, 17) orientées vers l'avant comportant des surfaces d'extrémité (19, 20) en forme de bague, **en ce que**, dans l'extrémité arrière (14), au moins une deuxième fente (25) s'ouvre qui s'étend vers l'extrémité avant (13) sans atteindre la susdite, et qui sépare deux feuilles (27, 28) orientées vers l'arrière comportant des surfaces d'extrémité (30, 31) en forme de bague, et **en ce que**, à chacune des extrémités (13, 14) du corps formant ressort, une surface d'extrémité (19, 31) fait saillie axialement par rapport à la surface d'extrémité (20, 30) d'une feuille adjacente, les surfaces d'extrémité (19, 31) faisant saillie aux extrémités opposées du ressort étant solicitées contre les surfaces d'extrémité (10) de bagues (6A, 3) adjacentes.

2. Cylindre selon la revendication 1, **caractérisé en ce que** la surface d'extrémité (19, 31) en forme de bague de la feuille individuelle (16, 28) est plane et s'étend perpendiculairement à une extension axiale (C) du corps formant ressort (7), les surfaces d'extrémité des bagues adjacentes (6A, 3) étant également planes et s'étendant perpendiculairement à l'extension axiale de celui-ci.

3. Cylindre selon la revendication 1 ou 2, **caractérisé en ce que** la longueur axiale (L2) de la fente (15, 25) du corps formant ressort (7) atteint au moins 60 % de la longueur totale (L1) du corps formant ressort.

4. Cylindre selon l'une quelconque des revendications précédentes, **caractérisé en ce que** la longueur axiale (L2) de la fente (15, 25) du corps formant ressort atteint au plus 90 % de la longueur totale (L1) du corps formant ressort (7).

5. Cylindre selon l'une quelconque des revendications précédentes, **caractérisé en ce que,** dans chaque extrémité (13, 14) du corps formant ressort (7), deux fentes (15, 25) ou plus s'ouvrent qui séparent trois feuilles (16, 17, 18 ; 26, 27, 28) ou plus.

6. Cylindre selon l'une quelconque des revendications précédentes, **caractérisé en ce que** le corps formant ressort (7) a une forme plate tant que la longueur axiale (L1) entre les extrémités (13, 14) opposées de celui-ci est inférieure au diamètre extérieur (D1).

7. Cylindre selon l'une quelconque des revendications précédentes, **caractérisé en ce que** le corps formant ressort (7) est en une seule pièce de métal.

8. Cylindre selon l'une quelconque des revendications 1 à 6, **caractérisé en ce que** le corps formant ressort est en plusieurs pièce de métal.
